# FASCICULE DE BREVET EUROPEEN

(11) **EP 0 579 539 B1**
(45) Date de publication et mention de la délivrance du brevet: **18.12.1996**
(21) Numéro de dépôt: 93401812.8
(22) Date de dépôt: 13.07.1993
(51) Int. Cl.: B60K 15/077, F02M 37/10

(54) **Ensemble d'aspiration pour réservoir à carburant**
Ansaugvorrichtung für Kraftstoffbehälter
Suction device for fuel tank

(30) Priorité: 13.07.1992 FR 9208661
(43) Date de publication de la demande: 19.01.1994
(73) Titulaire: COMPAGNIE PLASTIC OMNIUM Société Anonyme dite:, 69007 Lyon (FR)
(72) Inventeur: Bousselin, Geoffroy, F-60750 Choisy au Bac (FR)
(74) Mandataire: Leszczynski, André

(56) Documents cités:
- US-A- 4 795 320
- PATENT ABSTRACTS OF JAPAN vol. 15, no. 290 (M-1139)23 Juillet 1991 & JP-A-03 105 055 ( NIPPONDENSO CO. LTD. ) 01.05.1991
- PATENT ABSTRACTS OF JAPAN vol. 10, no. 242 (M-509)(2298) 21 Août 1986 & JP-A-61 072 864 ( NISSAN MOTOR CO. LTD. ) 14.04.1986

## Description

La présente invention a pour objet un ensemble d'aspiration pour réservoir à carburant muni d'une pompe à carburant.

Les ensembles d'aspiration connus qui équipent les réservoirs à carburant des automobiles notamment, comportent un corps généralement en matière plastique qui renferme une pompe à carburant.

Cette pompe a pour rôle d'aspirer le carburant en partie inférieure de l'ensemble d'aspiration pour l'envoyer vers l'extérieur du réservoir au moyen d'une tubulure de départ de carburant située à la partie supérieure dudit ensemble d'aspiration.

Dans ces dispositifs connus, la pompe est reliée à la tubulure de départ de carburant par l'intermédiaire d'un tube en caoutchouc qui a notamment pour rôle d'absorber les variations de hauteur de l'ensemble d'aspiration qui résulte des variations de géométrie du réservoir, soumis notamment à des dilatations thermiques.

Toutefois, ce raccord entre pour une grande part dans le prix de revient de l'ensemble d'aspiration, tant par son coût initial que par le nombre important de manutentions que nécessite sa mise en place.

La présente invention vise à fournir un ensemble d'aspiration muni d'une pompe dont le prix de revient est sensiblement réduit par rapport à un ensemble d'aspiration traditionnel.

La présente invention a pour objet un ensemble d'aspiration tel que défini par la revendication 1.

Le principal avantage de l'ensemble d'aspiration selon l'invention réside dans le fait qu'il ne comporte plus de raccord entre la pompe et la tubulure de départ de carburant.

Avantageusement, le passage de carburant qui se trouve dans la partie supérieure du corps peut être utilisé pour loger par exemple un filtre qui élimine les impuretés du carburant avant sa sortie de l'ensemble d'aspiration.

Dans un mode de réalisation préféré de l'invention, la pompe est raccordée audit passage de carburant avec sa tubulure de sortie de carburant s'engageant dans l'embouchure dudit passage. Elle y est maintenue en place à l'aide d'un joint.

Dans ce mode de réalisation, la pompe est maintenue à l'intérieur du corps de l'ensemble d'aspiration en étant simplement suspendue par sa tubulure de sortie de carburant.

Dans une variante préféré de ce mode de réalisation, la tubulure de sortie de la pompe peut coulisser à force dans l'embouchure dudit passage de carburant et présente une longueur suffisante pour pouvoir adapter automatiquement la hauteur de l'ensemble d'aspiration lorsqu'il est mis en place à l'intérieur du réservoir de carburant.

Il suffit pour cela d'enfoncer la tubulure de la pompe très légèrement dans l'embouchure de passage de carburant, le réglage de hauteur adéquat se faisant lors de l'installation de l'ensemble d'aspiration lorsque le fond du réservoir repousse la pompe vers le haut et positionne axialement la tubulure par rapport à ladite embouchure.

Dans une autre variante, la pompe comporte une tubulure d'admission située à sa partie inférieure et une crépine filtrante est raccordée à cette tubulure d'admission.

La crépine présente de préférence une élasticité axiale susceptible de compenser les variations de hauteur du réservoir.

Bien entendu, les deux variantes décrites ci-dessus ne sont pas exclusives et on peut avantageusement monter la tubulure de sortie de la pompe coulissante à l'embouchure du passage de carburant tout en équipant la tubulure d'admission de la pompe d'une crépine élastique.

Dans un mode de réalisation préféré de l'invention, ladite crépine est maintenue à l'intérieur d'un bac d'aspiration et limite les mouvements latéraux de la pompe suspendue dans le corps de l'ensemble d'aspiration.

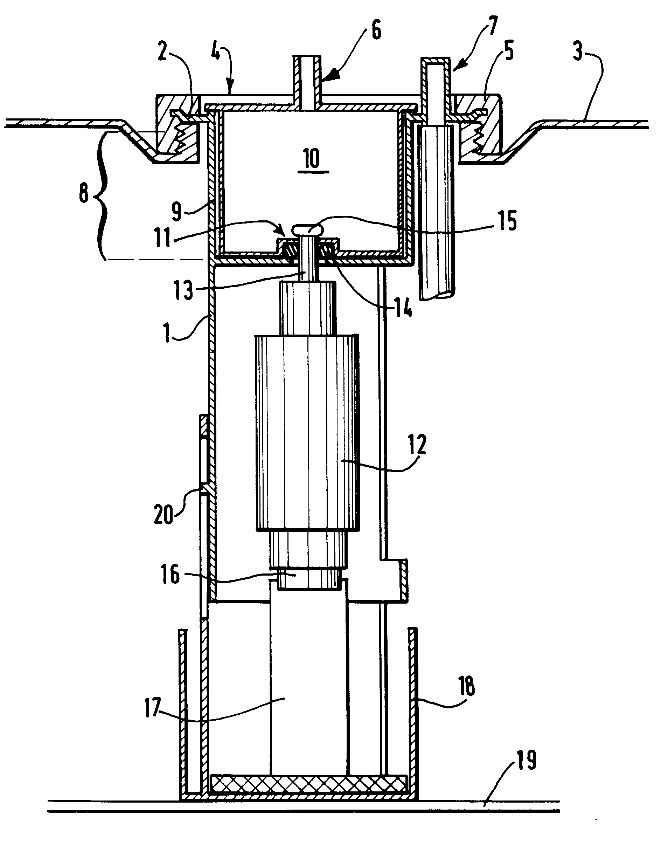

Dans le but de mieux faire comprendre l'invention, on va en décrite maintenant un mode de réalisation donné à titre d'exemple et sans aucun caractère limitatif en référence à la figure unique annexée.

Sur cette figure, on a représenté un ensemble d'aspiration selon l'invention qui comporte un corps 1 en matière plastique muni d'une collerette de fixation 2.

L'ensemble d'aspiration décrit ici est destiné à équiper un réservoir 3 en étant inserré dans un orifice 4 dudit réservoir, et à être maintenu en place par vissage d'un bouchon 5 sur la collerette 2.

Dans le mode de réalisation décrit, l'ensemble d'aspiration laisse dépasser du réservoir une tubulure de départ de carburant 6 et une tubulure de retour de carburant 7.

La partie supérieure 8 de l'ensemble d'aspiration définit selon l'invention un passage de carburant 9 permettant d'acheminer ce dernier jusqu'à la tubulure de départ 6.

En outre, dans le cas présent, le passage 9 permet de loger un filtre 10.

Le passage de carburant 9 comporte à sa partie inférieure une ouverture 11 par laquelle pénètre le carburant aspiré.

Conformément à l'invention, une pompe 12 est directement raccordée à l'embouchure dudit passage de carburant, avec sa tubulure de sortie de carburant pénétrant dans l'orifice 11.

Un joint spécialement adapté 14 permet d'assurer l'étanchéite du raccord et de maintenir la tubulure 13 en position, tandis qu'un bourrelet 15 de la tubulure 13 empêche le retrait de cette dernière.

La pompe 12 comporte à sa partie inférieure une tubulure d'admission 16 sur laquelle est directement raccordée une crépine filtrante 17 qui présente une élasticité axiale lui permettant d'adapter sa hauteur à la distance existant entre la tubulure d'admission 16 de la pompe et le fond 19 du réservoir.

Cette crépine 17 est logée dans un bac d'aspiration 18 qui est libre de coulisser axialement par rapport au corps 1, sous l'effet des variations géométriques du réservoir 3.

Pour éviter une désolidarisation du bac 18 d'avec le corps 1 lors du montage ou du démontage de l'ensemble d'aspiration, une butée 20 permet de limiter vers le bas le coulissement du bac 18 par rapport au corps 1.

On comprend que la crépine 17 ne peut se déplacer que verticalement puisqu'elle est maintenue à l'intérieur du bac 18. Par conséquent, outre qu'elle filtre le carburant, elle limite les mouvements latéraux de la pompe 12 qui est simplement suspendue par sa tubulure de sortie 13 à l'intérieur du corps 1.

Il est bien entendu que le mode de réalisation qui vient d'être décrit ne présente aucun caractère limitatif et qu'il pourra recevoir toutes modifications désirables sans sortir pour cela du cadre de l'invention.

## Revendications

1. Ensemble d'aspiration destiné à être introduit dans un réservoir à carburant (3), notamment d'un véhicule automobile à essence, en laissant dépasser du réservoir une tubulure de départ de carburant (6) comportant un corps (1) muni d'une pompe (12) apte à aspirer le carburant en partie inférieure du corps et à l'envoyer en partie supérieure du corps pour l'évacuer vers l'extérieur du réservoir (3), la partie supérieure (8) du corps (1) définissant un passage de carburant (9) apte à acheminer le carburant aspiré jusqu'en partie supérieure de l'ensemble d'aspiration, la sortie (13) de la pompe (12) étant directement raccordée à l'embouchure (11) dudit passage de carburant (9), caractérisé par le fait que ledit passage de carburant (9) achemine le carburant jusqu'à la tubulure de départ de carburant (6).

2. Ensemble d'aspiration selon la revendication 1, caractérisé par le fait que la pompe (12) est suspendue par sa tubulure de sortie de carburant (13) à l'embouchure (11) dudit passage de carburant (9).

3. Ensemble d'aspiration selon la revendication 2, caractérisé par le fait que la tubulure de sortie (13) de la pompe (12) est susceptible de coulisser à force dans l'embouchure (11) dudit passage de carburant (9) au moment de la mise en place de l'ensemble d'aspiration dans le réservoir à carburant.

4. Ensemble d'aspiration selon l'une quelconque des revendications 2 et 3, caractérisé par le fait que la pompe (12) comporte une tubulure d'admission (16) située à la partie inférieure de celle-ci, qui est raccordée à une crépine filtrante (17) limitant les mouvements latéraux de la pompe (12) suspendue dans le corps (1) de l'ensemble d'aspiration.

## Claims

1. Suction device intended to be inserted in a fuel tank (3), especially of a petrol-engined motor vehicle, allowing a fuel outlet tube (6) to protrude from the tank, including a body (1) equipped with a pump (12) capable of sucking up fuel from the lower part of the body and sending it into the upper part of the body in order to discharge it to the outside of the tank (3), the upper part (8) of the body (1) defining a fuel passage (9) capable of conveying the sucked-up fuel as far as the upper part of the suction assembly, the outlet (13) of the pump (12) being coupled directly to the mouth (11) of the said fuel passage (9), characterized in that the said fuel passage (9) conveys the fuel as far as the fuel outlet tube (6).

2. Suction device according to Claim 1, characterized in that the pump (12) is suspended via its fuel outlet tube (13) at the mouth (11) of the said fuel passage (9).

3. Suction device according to Claim 2, characterized in that the outlet tube (13) of the pump (12) can slide forcibly in the mouth (11) of the said fuel passage (9) at the moment when the suction device is fitted in the fuel tank.

4. Suction device according to either one of Claims 2 and 3, characterized in that the pump (12) includes an inlet tube (16) situated at the lower part thereof, which is connected to a filtering strainer (17) limiting the lateral movements of the pump (12) suspended in the body (1) of the suction device.

## Patentansprüche

1. Ansaugvorrichtung, die dazu bestimmt ist, in einen Kraftstofftank (3), insbesondere eines Benzin-Kraftfahrzeugs, eingeführt zu werden, wobei man einen Kraftstoff-Auslaßstutzen (6) über den Tank überstehen läßt, mit einem Körper (1), der mit einer Pumpe (12) versehen ist, die geeignet ist, den Kraftstoff im unteren Teil des Körpers anzusaugen und in den oberen Teil des Körpers zu fördern, um ihn nach außerhalb des Tanks (3) abzugeben, wobei der obere Teil (8) des Körpers (1) einen Kraftstoffkanal (9) bildet, der geeignet ist, den angesaugten Kraftstoff im oberen Teil der Ansaugvorrichtung zu leiten, wobei der Auslaß (13) der Pumpe (12) direkt an die Mündung (11) dieses Kraftstoffkanals (9) angeschlossen ist, dadurch gekennzeichnet, daß der Kraftstoffkanal (9) den Kraftstoff bis zu dem Kraftstoff-Auslaßstutzen (6) leitet.

2. Ansaugvorrichtung nach Anspruch 1, dadurch gekennzeichnet, daß die Pumpe (12) mit ihrem Kraftstoff-Auslaßstutzen (13) an der Mündung (11) des Kraftstoffkanals (9) aufgehängt ist.

3. Ansaugvorrichtung nach Anspruch 2, dadurch gekennzeichnet, daß der Auslaßstutzen (13) der Pumpe (12) im Augenblick des Einsetzens der Ansaugeinheit in den Kraftstofftank unter Krafteinwirkung in der Mündung (11) des Kraftstoffkanals (9) gleiten kann.

4. Ansaugvorrichtung nach Anspruch 2 oder 3, dadurch gekennzeichnet, daß die Pumpe (12) einen im unteren Teil derselben angeordneten Einlaßstutzen (16) aufweist, der an einem Filterkorb (17) angeschlossen ist, der die seitlichen Bewegungen der in dem Körper (1) der Ansaugvorrichtung aufgehängten Pumpe (12) begrenzt.
